**Europäisches Patentamt**

(19) **European Patent Office**

**Office européen des brevets**

(11) Veröffentlichungsnummer: **0 063 774**
**B1**

(12) **EUROPÄISCHE PATENTSCHRIFT**

(45) Veröffentlichungstag der Patentschrift:
31.07.85

(51) Int. Cl.⁴: **A 01 B 59/043**

(21) Anmeldenummer: **82103287.7**

(22) Anmeldetag: **20.04.82**

(54) **Geräteanbauvorrichtung für ein landwirtschaftliches Arbeitsfahrzeug.**

(30) Priorität: **27.04.81 US 257688**

(43) Veröffentlichungstag der Anmeldung:
**03.11.82 Patentblatt 82/44**

(45) Bekanntmachung des Hinweises auf die Patenterteilung:
**31.07.85 Patentblatt 85/31**

(84) Benannte Vertragsstaaten:
**AT DE FR GB IT SE**

(56) Entgegenhaltungen:
**DE - A - 2 948 899**
**US - A - 2 971 591**
**US - A - 3 791 456**
**US - A - 4 064 945**

(73) Patentinhaber: **DEERE & COMPANY, 1 John Deere Road, Moline Illinois 61265 (US)**

(72) Erfinder: **Kittle, Carl Edwin, 2312 Primrose, Cedar Falls Iowa 50613 (US)**
Erfinder: **Schafer, Richard Arthur, Rural Route 1, Traer Iowa 50675 (US)**
Erfinder: **Price, David Scott, 1724 - 52nd Street, S.E., Kentwood Michigan 49508 (US)**

(74) Vertreter: **Gramm, Werner, Dipl.-Ing. et al, Patentanwälte Gramm + Lins Theodor-Heuss-Strasse 2, D-3300 Braunschweig (DE)**

## Beschreibung

Die Erfindung betrifft eine Gerätebauvorrichtung für ein landwirtschaftliches Arbeitsfahrzeug mit einem Rahmengehäuse zur Lagerung der Hinterachse, bestehend aus

— einem um eine Kippachse schwenkbaren Trägerkörper;
— einer Gerätekupplung, die mit ihrem vorderen Ende schwenkbar am unteren Teil des Trägerkörpers gelagert ist, während ihr, hinteres, geräteseitiges Ende zur Geräteverbindung dient; und aus
— einem Schwenkantrieb, dessen vorderes Ende am Rahmengehäuse angreift, und dessen hinteres Ende an dem Trägerkörper zu dessen Verschwenkung angelenkt ist.

Eine derartige Ausführungsform läßt sich der US-Patentschrift 4 216 975 bzw. der deutschen Offenlegungsschrift 2 948 899 entnehmen. Der Trägerkörper ist hier als Kniehebel ausgebildet, der einen verhältnismäßig langen, sich nah oben erstreckenden Hebelarm und einen verhältnismäßig kurzen, sich nach unten erstreckenden Hebelansatz aufweist, an dem zwei untere Zuglenker, eine Zugstange sowie Schwenkarme angreifen. Der Schwenkantrieb greift am oberen Ende des sich nach oben erstreckenden Hebelarmes an, um den Kniehebel zu verschwenken und dadurch die Stellung der Zuglenker sowie der Zugstange zu justieren. Ein linker und ein rechter Hubarm sind mit ihren vorderen Enden drehfest mit den beiden Enden der Kippachse und mit ihren hinteren Enden über Hubstreben mit den unteren Zuglenkern gelenkig verbunden. Die Betätigung der Hubarme erfolgt über ein Paar Hubzylinder, die einerseits am Rahmengehäuse und andererseits am linken bzw. rechten Hubarm angelenkt sind. Die unteren Zuglenker sind an seitlichen Verbindungslaschen des Trägerkörpers über kugelförmige Lager angelenkt. Die Kippachse liegt unterhalb der durch die Hinterachse gehenden Horizontalebene.

Bei dieser vorbekannten Ausführungsform ist ein an der Gerätekupplung festlegbares Kupplungsteil vorgesehen, das eine Einrichtung zum lösbaren Kupplungseingriff in das anzukuppelnde Gerät aufweist.

Bei dieser vorbekannten Konstruktion muß die Schwenklagerung des Kniehebels verhältnismäßig hohe Kräfte einschließlich einer im wesentlichen horizontalen Kraftkomponente aufnehmen, die sich im wesentlichen aus der von dem Gerät auf die Anbauvorrichtung ausgeübten Zugkraft ergibt. Diese Zugbelastung ruft Reibungsverluste hervor, die ihrerseits einen unerwünschten hysteretischen Fehler erzeugen hinsichtlich der Arbeitsweise der Abtasteinrichtung dieser Konstruktion. Nachteilig ist ferner, daß die Zugstange mit ihrem vorderen Ende am Kniehebel angelenkt ist, während ihr hinteres Ende vom Kupplungsträger gehalten wird, so daß die Zugstange bei der Verschwenkung des Kniehebels lediglich eine horizontale Verschwenkung ausführen kann.

Die vorbekannte Geräteanbauvorrichtung ist nicht kompakt gestaltet und läßt sich daher bei bestimmten zweiradangetriebenen Ackerschleppern nicht verwenden. Nachteilig ist schließlich, daß der Schwenkantrieb einen verhältnismäßig langen Betätigungsweg zurücklegen muß, um eine verhältnismäßig kurze Vor- und Zurückbewegung der Zuglenker sowie der Zugstange zu erhalten, weil der nach oben ragende Hebelarm erheblich länger ist als der untere Hebelansatz.

Der Erfindung liegt die Aufgabe zugrunde, die eingangs erläuterte Geräteanbauvorrichtung unter Vermeidung der vorstehend aufgeführten Nachteile so zu verbessern, daß sich bei Verwendung einer Abtasteinrichtung ein kleinerer hysteretischer Fehler aufgrund geringerer Reibungsverluste ergibt.

Die Aufgabe wird gemäß der Erfindung durch folgende Merkmale gelöst:

— der Trägerkörper ist jochförmig ausgebildet;
— die Kippachse ist im Rahmengehäuse gelagert;
— der Trägerkörper ist an seinem oberen Teil neben dem Rahmengehäuse schwenkbar auf der Kippachse gelagert;
— der Schwenkantrieb greift am unteren Teil des Trägerkörpers an;
— zwischen das vordere und hintere Ende des Schwenkantriebes ist eine Abtasteinrichtung für die durch das Gerät hervorgerufene und von der Gerätekupplung auf den Trägerkörper übertragene Belastung geschaltet; und
— die Abtasteinrichtung ist ausschließlich mit dem Schwenkantrieb mechanisch verbunden.

In einer zweckmäßigen Ausführungsform ist es vorteilhaft, wenn das vordere Ende der Gerätekupplung gegenüber dem Trägerkörper um eine nach links und rechts herausragende Kupplungsachse verschwenkbar ist, die auch durch das hintere Ende des Schwenkantriebes geführt ist.

Die beiden Enden des Schwenkantriebes können durch einen Längenverstellantrieb miteinander verbunden sein zum Verschwenken des Trägerkörpers und zur Justierung der Gerätekupplung. Dieser Längenverstellantrieb kann beispielsweise ein Hydraulikzylinder sein, der mit seinem einen Ende am Boden des Rahmengehäuses angelenkt ist, während seine Kolbenstange mit der Abtasteinrichtung verbunden ist, die ihrerseits am Trägerkörper angelenkt ist.

Schwenkantrieb mit Abtasteinrichtung liegen somit vorzugsweise unterhalb der durch die Hinterachse gehenden Horizontalebene.

Es ist zweckmäßig, wenn die Gerätekupplung eine Zugstange umfaßt, die am unteren Teil des Trägerkörpers um einen lotrechten Kupplungszapfen seitlich verschwenkbar gelagert ist.

Die erfindungsgemäße Konstruktion kann vorzugsweise noch folgende weitere Merkmale aufweisen:

a) ein Mittellenker ist mit seinem vorderen Ende am Rahmengehäuse angelenkt;

b) ein linker und ein rechter Hubarm sind am linken bzw. rechten Ende der Kippachse drehfest verbunden;

c) ein linker und ein rechter Hubzylinder sind einerseits am Rahmengehäuse und andererseits am linken bzw. rechten Hubarm angelenkt zum Verschwenken der Kippachse und der Hubarme;

d) die Gerätekupplung umfaßt einen linken und einen rechten unteren Zuglenker, deren vorderen Enden an einem linken bzw. rechten Außenabschnitt des Trägerkörpers angelenkt sind, deren hinteren Enden sich nach rückwärts erstrecken und deren mittleren Abschnitte mit dem linken bzw. rechten Hubarm über Hubstreben gelenkig verbunden sind.

Die Gerätekupplung umfaßt somit die beiden unteren Zuglenker sowie eine mittlere Zugstange, die alle an dem Trägerkörper angreifen. Letzterer kann ein linkes und ein rechtes Seitenteil aufweisen, die an ihren oberen vorderen Enden auf der Kippachse gelagert und an ihren unteren Enden über ein angenähert horizontal angeordnetes Bodenteil miteinander verbunden sind. Dabei kann das Bodenteil aus zwei übereinanderliegenden Bodenblechen bestehen, zwischen die Zugstange verschwenkbar geführt ist. Außerdem können im hinteren Bereich des Bodenteils mehrere Bohrungen zum Einstecken von Zapfen vorgesehen sein, die den seitlichen Verschwenkbereich der Zugstange begrenzen.

Weitere Merkmale der Erfindung sind Gegenstand der Unteransprüche und werden anhand eines Ausführungsbeispieles näher erläutert.

Ein Vorteil der neuen Geräteanbauvorrichtung ist darin zu sehen, daß die Abtasteinrichtung exakter arbeitet, weil die von dem Anbaugerät ausgeübten Zugkräfte in der Geräteanbauvorrichtung geringere Reibungsverluste und dadurch einen geringeren hysteretischen Fehler hervorrufen. Vorteilhaft ist ferner, daß die Zugstange nicht nur horizontal, sondern auch vertikal verschwenkt werden kann. Die neue Geräteanbauvorrichtung baut sehr kompakt, wobei sich der Trägerkörper mit Hilfe eines Hydraulikzylinders verschwenken läßt, der einen verhältnismäßig kurzen Arbeitshub aufweisen kann. Durch die Anordnung der Abtasteinrichtung sowie des Betätigungszylinders für den Schwenkantrieb unterhalb des Rahmengehäuses läßt sich diese Konstruktion auch ohne Schwierigkeit an zweiradangetriebene Ackerschleppern verwenden. Außerdem beeinträchtigt die neue Geräteanbauvorrichtung nicht die rückwärtige Sicht von der Schlepperkabine.

In der Zeichnung ist eine als Beispiel dienende Ausführungsform der Erfindung dargestellt. Es zeigt

Fig. 1 in perspektivischer Darstellung eine Geräteanbauvorrichtung in einer Blickrichtung nach vorn und nach unten gegen die rechte hintere Seite eines nicht näher dargestellten Ackerschleppers und

Fig. 2 die Darstellung gemäß Fig. 1 in einer Blickrichtung nach rückwärts und nach oben von unterhalb des Hinterachsgehäuses.

Ein Rahmengehäuse 10 umfaßt ein nicht näher dargestelltes Getriebe, eine Hinterachse 12, eine Kippachse 14 sowie eine Zapfwelle 15. Eine Geräteanbauvorrichtung 16 ermöglicht das Ankuppeln eines nicht näher dargestellten Anbaugerätes an das Rahmengehäuse 10.

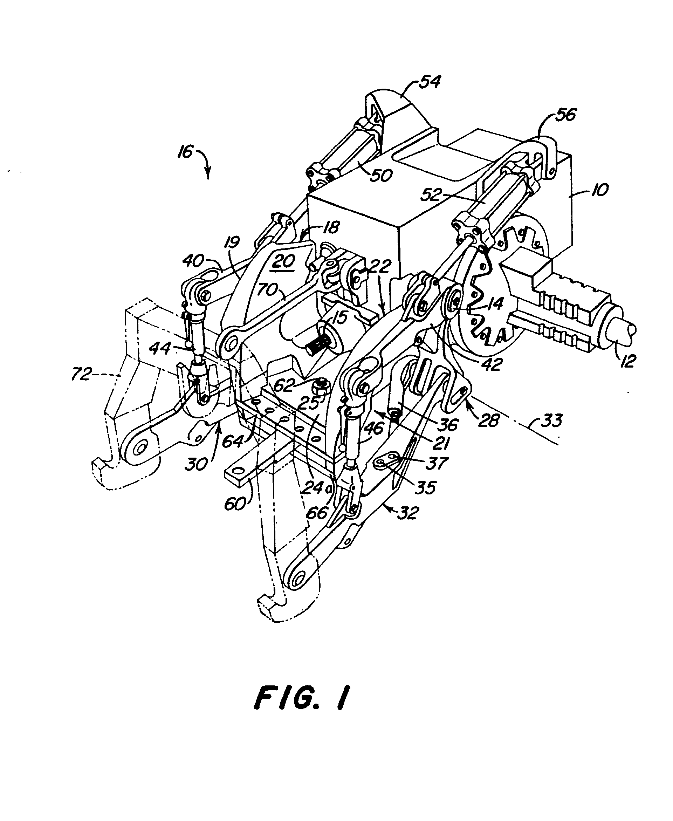

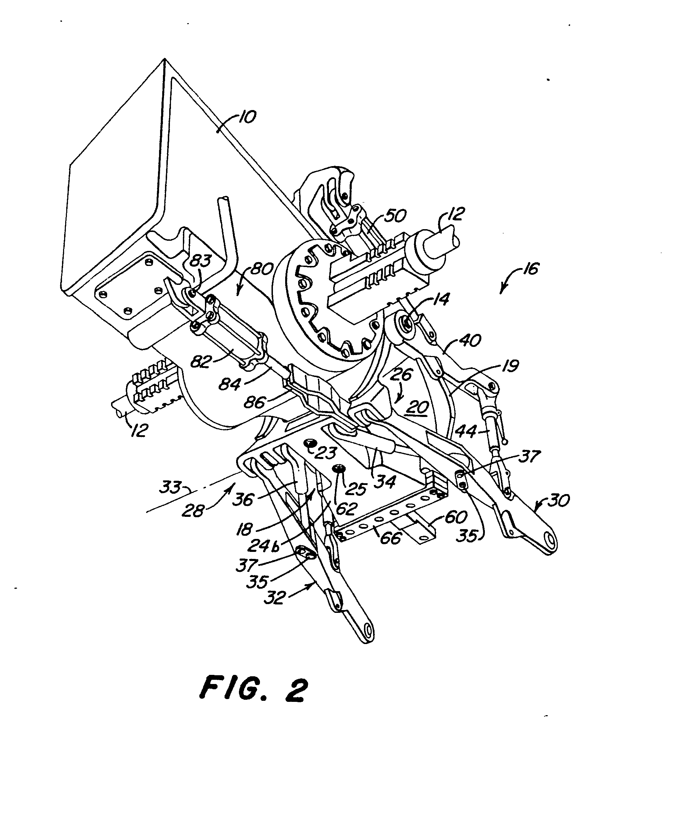

Die Geräteanbauvorrichtung 16 umfaßt einen jochförmig ausgebildeten Trägerkörper 18, der aus einem linken und einem rechten vertikal angeordneten Seitenteil 20, 22 besteht, die an ihren unteren Enden über ein horizontales Bodenteil fest verbunden sind, das aus einem oberen und einem unteren Bodenblech 24a, 24b besteht. Das Bodenteil weist zwei sich lotrecht erstreckende Kupplungsbohrungen 23, 25 auf. Die oberen, vorderen Abschnitte beider Seitenteile 20, 22 sind auf dem linken bzw. rechten Ende der Kippachse 14 auf nicht näher dargestellten Lagern verschwenkbar gelagert. Im unteren, vorderen Bereich des Trägerkörpers 18 sind Lagerungen 26, 28 vorgesehen, die jeweils ein Paar kugelförmiger bzw. sphärischer Lager umfassen, wie sie beispielsweise im US-Patent 4 216 975 beschrieben sind. An diesen Lagern sind die vorderen Ende eines linken und eines rechten unteren Zuglenkers 30, 32 schwenkbar befestig. Die gebogenen hinteren Enden der Seitenteile 20, 22 weisen seitlich vorragende Querschwingflächen 19, 21 auf, an die sich die Zuglenker 30, 32 in ihrer angehobenen Stellung anlegen, so daß in dieser Stellung eine Querschwingbewegung unterbunden wird. Die Querschwingfläche 21 ist in Fig. 1 durch andere Bauteile abgedeckt, ist jedoch identisch ausgebildet mit der in Fig. 2 erkennbaren Querschwingfläche 19.

Innerhalb und neben den Lagern für die vorderen Enden der unteren Zuglenker 30, 32 sind an dem Trägerkörper 18 Lager für die vorderen Enden eines linken und eines rechten Schwenkarmes 34, 36 vorgesehen, deren hinteren Enden nicht dargestellte Längsschlitze aufweisen, durch die ein Zapfen ragt, der lotrecht durch eine der Bohrungen 35 oder 37 im mittleren Abschnitt der unteren Lenker 30, 32 gesteckt ist. Ist der Zapfen durch die Bohrung 35 gesteckt, wird ein Nachaußenschwenken der unteren Zuglenker 30, 32 vollständig verhindert. Ragt der Zapfen durch die Bohrung 37, ist innerhalb eines begrenzten Bereiches ein Querschwingen möglich. Jeder Schwenkarm 34, 36 umfaßt eine Gewindestange, die in eine Spindelmutter eingreift, um eine Längen-Feinjustierung vornehmen zu können. Eine sich quer erstreckende Kupplungsachse 33 verläuft durch die vorderen Ende der unteren Zuglenker 30, 32 und der Schwenkarme 34, 36. Befinden sich die Zuglenker 30, 32 in ihrer unteren Stellung, schlagen sie nicht gegen die Querschwingflächen 19, 21 an; in dieser Stellung stehen einer Querschwinbewegung die Schwenkarme 34, 36 entgegen, die Querschwingkräfte auf den Trägerkörper 18 und von dort auf die Schwenklagerung an der Kippachse 14 übertragen.

Ein linker und ein rechter Hubarm 40, 42 sind mit ihren vorderen Ende drehfest am linken bzw. rechten Ende der Kippachse 14 befestigt. Die hinteren Ende der Hubarme 40, 42 sind an oberen Enden zweier Hubstreben 44, 46 angelenkt, deren unteren Enden mit den unteren Zuglenkern 30, 32 gelenkig verbunden sind. Eine oder beide Hubstreben 44, 46 könnten durch einen Hydraulikzylinder ersetzt werden, um eine Vertikaljustierung der unteren Zuglenker 30, 32 zum Ankuppeln eines Gerätes vorzunehmen. Ein linker und ein rechter Hubzylinder 50, 52 sind mit ihren vorderen Enden an Ansätzen 54, 56 des Rahmengehäuses 10 angelenkt, während die Enden ihrer Kolbenstangen an den Hubarmen 40, 42 angelenkt sind, so daß durch Betätigung der Hubzylinder die Hubarme angehoben und die Kippachse 14 gedreht und dadurch die Zuglenker 30, 32 angehoben bzw. abgesenkt werden.

Eine Zugstange 60 ragt mit ihrem vorderen Ende zwischen die beiden Bodenbleche 24a, 24b des Trägerkörpers 18 und ist dort durch einen lotrechten Kupplungszapfen 62 festgelegt, der eine lorechte Kupplungsachse bildet. Zwischen den unteren hinteren Abschnitten der beiden Seitenteile 20, 22 des Trägerkörpers sind zwei übereinanderliegende Lochbleche 64, 66 vorgesehen, die das hintere Ende der Zugstange 60 über bzw. untergreifen. In bestimmte Löcher dieser Lochbleche 64, 66 können Stifte eingeschoben werden, um so die seitliche Verschwenkung der Zugstange 60 zu begrenzen. Das vordere Ende der Zugstange 60 weist drei nicht dargestellte, sich lotrecht erstreckende Kupplungsbohrungen auf, so daß die Zugstange 60 unter Ausnutzung der beiden Kupplungsbohrungen 23, 24 in zahlreichen unterschiedlichen Stellungen mit dem Trägerkörper 18 verbunden werden kann, um die effektive Länge der Zugstange relativ gegenüber der Zapfwelle 15 wesentlich verändern zu können, ohne an das hintere Ende der Zugstange weitere Stangenteile ansetzen zu müssen. Auf diese Weise lassen sich unterschiedliche Zapfwellenlängen ausgleichen.

Ein oberer Mittellenker 70 ist mit seinem vorderen Ende oberhalb der Zapfwelle 15 an der Rückwandung des Rahmengehäuses 10 angelenkt. An die hinteren Enden der unteren Zuglenker 30, 32 sowie des oberen Mittellenkers 70 kann ein Kupplungsrahmen 72 angesetzt werden, der in Fig. 1 strichpunktiert dargestellt ist, die Form eines umgekehrten U aufweisen und ähnlich der im US-Patent 4 216 975 dargestellten Ausführungsform ausgebildet sein kann.

Ein Schwenkantrieb 80 ist zwischen der Unterseite des Rahmengehäuses 10 und dem unteren vorderen Abschnitt des Trägerkörpers 18 befestigt. Dieser Schwenkantrieb umfaßt einen Hydraulikzylinder 82, dessen vorderes Ende bei 83 am Boden des Rahmengehäuses 10 angelenkt ist, und dessen Kolbenstange 84 an einer Abtasteinrichtung 86 befestigt ist, die kapazitiv Zugkräfte abtastet, wie es im Detail in der US-Anmeldung Serial No. 228,440 der gleichen Anmelderin beschrieben ist. Natürlich können auch andere Abtasteinrichtungen z. B. vom Widerstands- oder Induktiv-Typ verwendet werden. Das andere Ende der Abtasteinrichtung 86, das zugleich das hintere Ende des Schwenkantriebs 80 bildet, ist so am Trägerkörper 18 angelenkt, daß dieser Anlenkpunkt auf der Kupplungsachse 33 liegt. Soll keine Last-Abttastung erfolgen, kann die Abtasteinrichtung 86 ausgebaut werden; in diesem Fall würde dann das hintere Ende der entsprechend länger ausgebildeten Kolbenstange 84 unmittelbar an dem Trägerkörper 18 angelenkt sein. Wesentlich ist, daß kein Teil der Abtasteinrichtung 86 unmittelbar mechanisch mit dem Rahmengehäuse 10 verbunden ist. Der Schwenkantrieb 80 sowie die Abtasteinrichtung 86 führen zu einer besonders einfachen und kompakten Anordnung, wobei die Lage unterhalb des Hinterachsgehäuses sicherstellt, daß der Schwenkantrieb 80 nicht anderen, auf der Rückseite des Ackerschleppers vorgesehenen Teilen im Wege steht. Diese Anordnung ermöglicht ferner eine gute rückwärtige Sicht von der Fahrerkabine, so daß der Fahrer bei guter Sicht die Kupplung in eine für die Ankupplung eines Anbaugerätes günstige Position manövrieren kann. Sind weder Last-Abtastung noch Verschwenkung des Trägerkörpers erwünscht, kann der den Schwenkantrieb 80 bildende Lenker durch eine nicht dargestellte starre Strebe ersetzt werden.

Die Wirkungsweise der dargestellten Geräteanbauvorrichtung ist wie folgt: Zur Justierung der Stellung der unteren Zuglenker 30, 32 oder aber der Zugstange 60 wird der Hydraulikzylinder 82 mit Hydraulikflüssigkeit beaufschlagt bzw. diese wird aus dem Zylinder abgelassen, um so an den Schwenkantrieb 80 auszufahren oder aber zusammenzuziehen. Hierdurch wird der Trägerkörper 18 um die Kippachse 14 verschwenkt. Da letztere wesentlich oberhalb der Uglenker und der Zugstange angeordnet ist, führt diese Verschwenkung zu einer wesentlichen horizontalen Vor- und Zurückbewegung der Zuglenker 30, 32 sowie zu einer Schwingbewegung der Zugstange 60. Die vertikale Positionierung der Zuglenker 30, 32 erfolgt durch Beaufschlagung der Hubzylinder 50, 52, wodurch ein Verschwenken der Zuglenker 30, 32 gegenüber dem Trägerkörper 18 um die Kupplungsachse 33 erfolgt. Handelt es sich — wie dargestellt — um doppelt wirkende Hubzylinder 50, 52 dann kann auf die Zuglenker 30, 32 auch eine nach unten gerichtete Hydraulikkraft einwirken, was insbesondere dann vorteilhaft sein kann, wenn als Anbaugerät ein Schar an die Zuglenker angekoppelt wird.

An das hintere Ende der Zugstange 60 kann in üblicher Weise ein nicht dargestelltes zugstangengezogenes Gerät angehängt werden. Ein Gerät mit Dreipunktkupplung kann an den Kupplungsrahmen 72 oder aber unmittelbar an die hinteren Enden der Zuglenker 30, 32 sowie des oberen Mittellenkers 70 angehängt werden. Bei jedem Anbaugerät werden die durch den Eingriff des Gerätes in den Boden entstehenden Zugkräfte über die Zugstange 60 oder aber die Zuglenker 30, 32 auf den Trägerkörper 18 übertragen, von wo eine Zugkraftkomponente auf den Schwenkantrieb 80 übertragen wird, wo sie von der Abtasteinrichtung 86 gemessen werden kann. Je nach Art der verwendeten Abtasteinrichtung kann ein Zugkraftsteuersystem, wie es im US-Patent 4 064 945 beschrieben ist, verwendet werden, um die Vertikalstellung der Zuglenker 30, 32 zu steuern, falls ein Gerät mit Dreipunktkupplung gezogen wird, oder aber um die nicht dargestellten Fernzylinder zu steuern, wenn ein zugstangengezogenes Gerät angebaut ist, und zwar jeweils in Abhängigkeit der abgetasteten Zugkraft. Da Schwenkantrieb 80, Zuglenker 30, 32 und Zugstange 60 angenähert innerhalb derselben Ebene liegen, werden angenähert alle Horizontalkomponenten der Zugkraft unmittelbar auf den den Schwenkantrieb 80 bildenden Lenker übertragen. Dadurch wird die Schwenklagerung des Trägerkörpers 18 auf der Kippachse 14 nicht mit den Kraftkomponenten beaufschlagt, die auf den Schwenkantrieb 80 weitergeleitet werden. Dadurch werden die in dieser Schwenklagerung auftretenden Reibungsverluste verringert. Dies wiederum führt zu einer Reduzierung des hysteretischen Fehlers in der Gesamtnfunktion der Geräteanbauvorrichtung hinsichtlich der Zugkraftabtastung.

**Patentansprüche**

1. Geräteanbauvorrichtung (16) für ein landwirtschaftliches Arbeitsfahrzeug mit einem Rahmengehäuse (10) zur Lagerung der Hinterachse (12), bestehen aus

— einem um eine Kippachse (14) schwenkbaren Trägerkörper (18);
— einer Gerätekupplung (30, 32, 60), die mit ihrem vorderen Ende schwenkbar am unteren Teil des Trägerkörpers (18) gelagert ist, während ihr hinteres, geräteseitiges Ende zur Geräteverbindung dient; und aus
— einem Schwenkantrieb (80), dessen vorderes Ende am Rahmengehäuse (10) angreift, und dessen hinteres Ende an dem Trägerkörper (18) zu dessen Verschwenkung angelenkt ist,

gekennzeichnet durch folgende Merkmale:

a) der Trägerkörper (18) ist jochförmig ausgebildet;
b) die Kippachse (14) ist im Rahmengehäuse (10) gelagert;
c) der Trägerkörper (18) ist an seinem oberen Teil neben dem Rahmengehäuse (10) schwenkbar auf der Kippachse (14) gelagert;
d) der Schwenkantrieb (80) greift am unteren Teil des Trägerkörpers (18) an;
e) zwischen das vordere und hintere Ende des Schwenkantriebes (80) ist eine Abtasteinrichtung (86) für die durch das Gerät herforgerufene und von der Gerätekupplung (30, 32, 60) auf den Trägerkörper (18) übertragene Belastung geschaltet; und
f) die Abtasteinrichtung (86) ist ausschließlich mit dem Schwenkantrieb (80) mechanisch verbunden.

2. Geräteanbauvorrichtung nach Anspruch 1, dadurch gekennzeichnet, daß das vordere Ende der Gerätekupplung (30, 32) gegenüber dem Trägerkörper (18) um eine nach links und rechts herausragende Kupplungsachse (33) verschwenkbar ist, die auch durch das hintere Ende des Schwenkantriebes (80) geführt ist.

3. Geräteanbauvorrichtung nach Anspruch 1 oder 2, gekennzeichnet durch einen die beiden Enden des Schwenkantriebs (80) miteinander verbindenden Längenverstellantrieb (82, 84) zum Verschwenken des Trägerkörpers (18) und zur Justierung der Gerätekupplung (30, 32, 60).

4. Geräteanbauvorrichtung nach einem der vorhergehenden Ansprüche, dadurch gekennzeichnet, daß die Kippachse (14) Lager für den Trägerkörper (18) trägt, so daß Kippachse und Trägerkörper relativ gegeneinander verdrehbar sind.

5. Geräteanbauvorrichtung nach einem der vorhergehenden Ansprüche, dadurch gekennzeichnet, daß der Schwenkantrieb (80) mit der Abtasteinrichtung (86) unterhalb der durch die Hinterachse (12) gehenden Horizontalebene liegt.

6. Geräteanbauvorrichtung nach einem der vorhergehenden Ansprüche, dadurch gekennzeichnet, daß die Gerätekupplung (30, 32, 60) eine Zugstange (60) umfaßt, die am unteren Teil des Trägerkörpers (18) um einen lotrechten Kupplungszapfen (62) seitlich verschwenkbar gelagert ist.

7. Geräteanbauvorrichtung nach einem der vorhergehenden Ansprüche, gekennzeichnet durch folgende weitere Merkmale:

a) ein Mittellenker (70) ist mit seinem vorderen Ende am Rahmengehäuse (10) angelenkt;
b) ein linker und rein rechter Hubarm (40, 42) sind am linken bzw. rechten Ende der Kippachse (14) drehfest verbunden;
c) ein linker und ein rechter Hubzylinder (50, 52) sind einerseits am Rahmengehäuse (10) und andererseits am linken bzw. rechten Hubarm (40, 42) angelenkt zum Verschwenken der Kippachse (14) und der Hubarm;
d) die Gerätekupplung (30, 32, 60) umfaßt einen linken und einen rechten unteren Zuglenker (30, 32), deren vorderen Enden an einem linken bzw. rechten Außenabschnitt des Trägerkörpers (18) angelenkt sind, deren hinteren Enden sich nach rückwärts erstrecken und deren mittleren Abschnitte mit dem linken bzw. rechten Hubarm (40, 42) über Hubstreben (44, 46) gelenkig verbunden sind.

8. Geräteanbauvorrichtung nach einem der vorhergehenden Ansprüche, gekennzeichnet, durch einen linken und einen rechten Schwenkarm (34, 36), die mit ihren vorderen Enden innenseitig von der Gerätekupplung (30, 32) am Trägerkörper (18) und mit ihren hinteren Enden an der Gerätekupplung (30, 32) angelenkt sind und eine Verschwenkung der Gerätekupplung in ihrer abgesenkten Stellung verhindern, während der Trägerkörper (18) Anschlagflächen (19, 21) aufweist, die bei angehobener Gerätekupplung an diese zur Anlage kommen und so deren Schwenkbereich begrenzen.

9. Geräteanbauvorrichtung nach Anspruch 6, 7 oder 8, dadurch gekennzeichnet, daß die Zugstange (60) einen ihre beiden Enden verbindenden Schaft aufweist, der in einer fest mit dem Trägerkörper verbundenen Zugstangenführung gleitend geführt ist.

10. Geräteanbauvorrichtung nach Anspruch 9, dadurch gekennzeichnet, daß die Zugstangenführung mehrere Bohrungen zum Einstecken von Zapfen aufweist, die den seitlichen Verschwenkbereich der Zugstange (60) begrenzen.

11. Geräteanbauvorrichtung nach einem der vorhergehenden Ansprüche, dadurch gekennzeichnet, daß der Trägerkörper (18) ein linkes und ein rechtes Seitenteil aufweist, die an ihren oberen vorderen Enden auf der Kippachse (14) gelagert und an ihren unteren Enden über ein angenähert horizontal angeordnetes Bodenteil (24a, 24b, 64, 66) miteinander verbunden sind.

12. Geräteanbauvorrichtung nach Anspruch 11, dadurch gekennzeichnet, daß das Bodenteil (24a, 24b, 64, 66) aus zwei übereinanderliegenden Bodenblechen (24a, 24b, besteht, zwischen denen die Zugstange (60) verschwenkbar geführt ist.

13. Geräteanbauvorrichtung nach einem der Ansprüche 2 bis 12, dadurch gekennzeichnet, daß der Trägerkörper (18) ein linkes und ein rechtes Schwenklager (26, 28) aufweist, die die Lagerstellen für die vorderen Enden der beiden Zuglenker (30, 32) bilden und auf der Kupplungsachse (33) liegen, die sich durch einen vorderen Abschnitt des Bodenteils (24a, 24b, 64, 66) des Trägerkörpers (18) erstreckt.

14. Geräteanbauvorrichtung nach einem der vorhergehenden Ansprüche, gekennzeichnet durch ein an der Gerätekupplung (30, 32, 60) festlegbares Kupplungsteil (72), das eine Einrichtung zum lösbaren Kupplungseingriff in das Gerät aufweist.

## Claims

1. An attaching mechanism (16) for coupling an implement to an agriculture vehicle having a frame housing (10) for supporting a rear axle (12), the attaching mechanism comprising:

— carrier means (18) privotally supported on a rockshaft (14);
— implement coupling means (30, 32, 60) having a fore end pivotally coupled to the lower portion of said carrier means (18) and having an aft end facing the implement for coupling to the implement; and
— a pivot drive (80) having a fore end engaging the frame housing (10) and having an aft end pivotally coupled to said carrier means (18) to pivot said carrier means;

characterized by the following features:

a) said carrier means (18) has the shape of a yoke;
b) said rockshaft (14) is carried by said frame housing (10);
c) the upper portion of said carrier means (18) is pivotally supported on said rockshaft (14) adjacent to said frame housing (10);
d) said pivot drive (80) engages the lower portion of said carrier means (18);
e) load sensing means (86) is coupled between the fore and aft ends of said pivot drive (80) for sensing the load generated by the implement and transmitted from said implement coupling means (30, 32, 60) to said carrier means (18); and
f) said load sensing means (86) is mechanically connected only to said pivot drive (80).

2. The attaching mechanism according to claim 1, wherein the fore end of the implement coupling means (30, 32) is pivotal with respect to said carrier means (18) about a left und right extending coupling axis (33), the coupling axis also extending through the aft end of the pivot drive (80).

3. The attaching mechanism according to claim 1 or 2, further comprising length-adjusting power means (82, 84) interconnecting the two ends of said pivot drive (80) to pivot the carrier means (18) and to adjust the implement coupling means (30, 32, 60).

4. The attaching mechanism according to one of the preceding claims, wherein bearing means for said carrier means (18) are mounted on said rock-shaft (14) for allowing relative rotation therebetween.

5. The attaching mechanism according to one of the preceding claims, wherein the pivot drive (80) together with said sensing means (86) is positioned below the horizontal plane containing said rear axle (12).

6. The attaching mechanism according to one of the preceding claims, wherein the implement coupling (30, 32, 60) comprises a drawbar (60) pivotally coupled to the lower portion of said carrier means (18), the drawbar being pivotal laterally with respect to said carrier means (18) about a vertically extending coupling pin (62).

7. The attaching mechanism according to one of the preceding claims further comprising:

a) a center link (70) having a fore end pivotally coupled to the frame housing (10);

b) left and right lift arms (40, 42) being fixed against rotation with respective left and right ends of said rockshaft (14);

c) left and right lift cylinders (50, 52) being coupled to said frame housing (10) on the one hand and on the respective left and right lift arms (40, 42) on the other hand for pivoting the rockshaft (14) and the lift arms;

d) said implement coupling means (30, 32, 60) comprising left and right lower draft links (30, 32) having fore ends pivotally coupled to left and right outer portions, respectively, of said carrier means (18), further having aft ends projecting rearwardly and further having central portions coupled to respective left and right lift arms (40, 42) via lift links (44, 46).

8. The attaching mechanism of one of the preceding claims, further comprising left and right pivot arms (34, 36) having their fore ends coupled to said carrier means (18) inboard of the implement coupling means (30, 32) and having their aft ends coupled to said implement coupling means (30, 32), the pivot arms preventing a pivot movement of the implement coupling means when the implement coupling means is in a lowered position, the carrier means (18) including abutment means (19, 21) for engaging the implement coupling means (30, 32) when the implement coupling means is in a raised position and for limiting thus the pivot range of said implement coupling means (30, 32).

9. The attaching mechanism of claims 6, 7 or 8, wherein said drawbar (60) includes a shank interconnecting its two ends, said shank slidably guided in a drawbar support member rigidly connected with said carrier means.

10. The attaching mechanism according to claim 9, wherein said drawbar support member comprises a plurality of bores for receiving pins limiting the lateral pivot range of said drawbar (60).

11. The attaching mechanism according to one of the preceding claims, wherein said carrier means (18) comprises left and right side panels having upper fore portions supported by said rockshaft (14), and further comprises an approximately horizontally extending bottom panel (24a, 24b, 64, 66) interconnecting the lower ends of the side panels.

12. The attaching mechanism according to claim 11, wherein said bottom panel (24a, 24b, 64, 66) comprises two bottom plates (24a, 24b) arranged one upon the other, the drawbar (60) being pivotally supported between said bottom plates.

13. The attaching mechanism according to one of the claims 2 to 12, wherein said carrier means (18) comprises left and right pivot means (26, 28) forming the bearing supports for the fore ends of the two draft links (30, 32) and being disposed upon said coupling axis (33) which extends through a fore portion of the bottom panel (24a, 24b, 64, 66) of said carrier means (18).

14. The attaching mechanism according to one of the preceding claims, further comprising a coupling member (72) mountable on the implement coupling means (30, 32, 60) and having means for releasably engaging the implement.

**Revendications**

1. Système d'attelage (16) pour un tracteur agricole comportant un carter (10) relié au châssis pour le montage de l'essieu arrière (12), constitué par:

— un organe de support (18) puvant pivoter autour d'un axe de basculement (14);

— un dispositif d'attelage d'outil (30, 32, 60), qui est monté par son extrémité avant de façon pivotante sur la partie inférieure de l'organe de support (18), tandis que son extrémité arrière dirigée vers l'outil sert à accoupler cet outil; et

— un dispositif de commande de pivotement (80), dont l'extrémité avant attaque le carter (10) relié au châssis, et dont l'extrémité arrière est articulée sur l'organe de support (18) pour provoquer son pivotement, caractérisé par les particularités suivantes:

a) l'organe de support (18) a une forme de chape;

b) l'axe de basculement (14) est monté dans le carter (10) relié au châssis;

c) l'organe de support (18) est monté à pivotement par sa partie supérieure sur l'axe de basculement (14) à côté du carter (10) relié au châssis;

d) le dispositif de commande de pivotement (80) attaque l'organe de support (18) à sa partie inférieure;

e) il est prévu, entre les extrémités avant et arrière du dispositif de commande de pivotement (80), un dispositif palpeur (86) déterminant la charge engendrée par l'outil et transmise par le dispositif d'attelage d'outil (30, 32, 60) à l'organe de support (18); et

f) le dispositif palpeur (86) est relié mécaniquement exclusivement au dispositif de commande de pivotement (80).

2. Système d'attelage suivant la revendication 1, caractérisé en ce que l'extrémité avant du dispositif d'attelage d'outil (30, 32) peut pivoter par rapport à l'organe de support (18) autour d'un axe d'accouplement (33) faisant saillie vers la gauche et vers la droite, cet axe passant également par l'extrémité arrière du dispositif de commande de pivotement (80).

3. Système d'attelage suivant la revendication 1 ou 2, caractérisé par un dispositif de déplacement ou de réglage de longueur (82, 84) reliant entre elles les deux extrémités du dispositif de commande de pivotement (80), servant à faire pivoter l'organe de support (18) et à régler le dispositif d'attelge d'outil (30, 32, 60).

4. Système d'attelage suivant l'une quelconque des revendications précédentes, caractérisé en ce que l'axe de basculement (14) porte des paliers destinés à l'organe de support (18), de sorte que l'axe de basculement et l'organe de support peuvent pivoter l'un par rapport à l'autre.

5. Système d'attelage suivant l'une quelconque des revendications précédentes, caractérisé en ce que le dispositif de commande de pivotement (80) et le dispositif palpeur (86) se trouvent au-dessous du plan horizontal passant par l'essieu arrière (12).

6. Système d'attelage suivant l'une quelconque des revendications précédentes, caractérisé en ce que le dispositif d'attelage d'outil (30, 32, 60) comprend une barre d'attelage (60) qui est montée de façon à pouvoir pivoter latéralement autour d'un axe d'accouplement ou d'attelage vertical (62) à la partie inférieure de l'organe de support (18).

7. Système d'attelage suivant l'une quelconque des revendications précédentes, caractérisé par les particularités suivantes:

a) une barre centrale (70) est articulée par son extrémité avant sur le carter (10) relié au châssis;

b) des bras de levage gauche et droit (40, 42) sont calés angulairement sur les extrémités gauche et droite de l'axe de basculement (14);

c) des vérins de levage gauche et droit (50, 52) sont articulés d'une part au carter (10) relié au châssis et d'autre part, au bras de levage gauche et droit (40, 42) pour faire pivoter l'axe des basculement (14) et les bras de levage;

d) le dispositif d'attelage d'outil (30, 32, 60) comprend des barres inférieures gauche et droite (30, 32) dont les extrémités avant sont articulées sur les parties exterieures gauche et droite de l'organe de support (18), dont les extrémités arrière s'étendent vers l'arrière et dont les parties médianes sont reliées à articulation aux bras de levage gauche et droit (40, 42) par des bielles de levage (44, 46).

8. Système d'attelage suivant l'une quelconque des revendications précédentes, caractérisé par des bras de pivotement gauche et droit (34, 36) qui sont articulés par leur extrémité avant sur l'organe de support (18) à l'intérieur du dispositif d'attelage d'outil (30, 32) et par leur extrémité arrière sur le dispositif d'attelage d'outil (30, 32) , et qui empêchent un pivotement du dispositif d'attelage d'outil dans sa position abaissée, tandis que l'organe de support (18) présente des surfaces de butée (19, 21) qui, dans la position relevée du dispositiv d'attelage d'outil, viennent s'appliquer contre celui-ci et limitent ainsi son débattement angulaire.

9. Système d'attelage suivant la revendication 6, 7 ou 8, caractérisé en ce que la barre d'attelage (60) comporte une branche reliant ses deux extrémités, qui est guidée de façon coulissante dans un guide de barre d'attelage relié à l'organe de support.

10. Système d'attelage suivant la revendication 9, caractérisé en ce que le guide destiné à la barre d'attelage comporte plusieurs trous pour l'engagement de broches limitant le débattement angulaire latéral de la barre d'attelage (60).

11. Système d'attelage suivant l'une quelconque des revendications précédentes, caractérisé en ce que l'organe de support (18) présente des parties latérales gauche et droite qui sont montées par leur extrémité supérieure avant sur l'axe de basculement (14) et qui sont reliées ensemble à leur extrémité inféireure par un fond sensiblement horizontal (24a, 24b, 64, 66).

12. Système d'attelage suivant la revendication 11, caractérisé en ce que le fond (24a, 24b, 64, 66) est constitué par deux tôles de fond superposées (24a, 24b) entre lesquelles la barre d'attelage (60) est guidée de façon pivotante.

13. Système d'attelage suivant l'une quelconque des revendications 2 à 12, caractérisé en ce que l'organe de support (18) comporte des paliers de pivotement gauche et droit (26, 28) qui forment les points de montage pour les extrémités avant des deux barres inférieures (30, 32) et qui se trouvent sur l'axe d'accouplement (33) passant par la partie avant du fond (24a, 24b, 64, 66) de l'organe de support (18).

14. Système d'attelage suivant l'une quelconque des revendications précédentes, caractérisé par une pièce d'accouplement (72) pouvant être bloquée sur le dispositif d'attelage d'outil (30, 32, 60) et comportant un dispositif destiné à un engagement réalisant un accouplement amovible dans l'outil.

# FIG. 1

FIG. 2